# EUROPEAN PATENT SPECIFICATION

(11) **EP 2 432 176 B1**
(45) Date of publication and mention of the grant of the patent: **10.01.2018**
(21) Application number: 10791585.2
(22) Date of filing: 25.06.2010
(51) Int. Cl.: H04W 36/00

(54) **METHOD FOR TRANSFERRING PACKET DATA IN WIRELESS NETWORK AND BASE STATION CONTROLLER**
VERFAHREN ZUR ÜBERTRAGUNG VON PAKETDATEN IN EINEM DRAHTLOSEN NETZWERK UND BASISSTATIONSSTEUERUNG
PROCÉDÉ DE TRANSFERT DE DONNÉES PAR PAQUET DANS UN RÉSEAU SANS FIL ET CONTRÔLEUR DE STATION DE BASE

(30) Priority: 22.12.2009 CN 200910189252
(43) Date of publication of application: 21.03.2012
(73) Proprietor: ZTE Corporation, Shenzhen, Guangdong 518057 (CN)
(72) Inventor: LI, Shu, Shenzhen Guangdong 518057 (CN); YAN, Hong, Shenzhen Guangdong 518057 (CN); HE, Jianfeng, Shenzhen Guangdong 518057 (CN)
(74) Representative: Manitz Finsterwald Patentanwälte PartmbB
(86) International application number: PCT/CN2010/074502
(87) International publication number: WO 2010/149079

(56) References cited:
- WO-A2-03/034753
- WO-A2-2004/021582
- CN-A- 1 523 835
- CN-A- 101 047 622
- US-A1- 2006 291 416

## Description

### Technical Field

The present invention relates to packet data transferring technology, and more especially, to a method for transferring packet data in wireless network and a base station controller thereof.

### Background of the Related Art

General Packet Radio Service (GPRS) is a bearer service in Global System for Mobile Communications (GSM). Generally, the packet wireless network comprises one or more sub-networks, each of which comprises a certain number of service nodes (SNs), and in this application, these SNs are called Serving GPRS Support Nodes (SGSNs). The SGSNs can provide packet services to the mobile station (MS) via the base station controller (BSC). The main functions of these SGSNs include packet routing and forwarding, authentication and encryption, session management, mobility management, logical link management, and telephone bill generation and output.

Generally, one BSC might control multiple cells, correspondingly, it might also control multiple base transceiver stations (BTSs), and it is the connection point between the BTS and the mobile switching center (MSC) and provides an interface for exchanging information of the BTS and the MSC. The main functions of the BSC comprise: radio channel management, call implementation, establishment and removal of the communication links, and the control of the handover of the MS in the local control cell.

The MS is a user equipment, comprising on-board, portable or handheld user equipment. The BTS is a node in the radio access network (RAN) in the GSM and is responsible for receiving and sending the mobile signals in one cell.

In the prior art, the MS moves from the first cell to the second cell, and after the BSC receives the FLUSH-LL message, it selectively transfers the packet data of the first cell to be originally sent to the MS via the temporary block flow (TBF) of the MS and the second cell. Since the MS just moved into the second cell, it will take certain time for the MS communicating normally in the second cell, when the BSC receives the FLUSH-LL message, the TBF of the MS and the first cell can be released in most cases, which will cause packet data loss and thus seriously affect the data communication related to MS.

Related technology is known from CN 101 047 622 A.

### Summary of the Invention

The main purpose of the present invention is to provide a method for transferring packet data in a wireless network and a base station controller thereof, to effectively reduce the packet data loss generated in the process of the MS moving from the first cell to the second cell and to ensure the normal data communication related to MS.

In one aspect, the present invention provides a method for transferring packet data in a wireless network, and the method comprises:
an MS moves from a first cell to a second cell;
a BSC locally searches for a TBF of the MS and the first cell according to the temporary logical link identifier (TLLI) pre-allocated to the MS by an SGSN, and acquires the packet data in the first cell to be originally sent to the MS via the TBF of the MS and the first cell; locally searches for TBF of the MS and the second cell according to the TLLI, and transfers the packet data to the TBF of the MS and the second cell; sends the packet data to the BTS of the second cell via the TBF of the MS and the second cell before receiving the message sent by the SGSN for requesting the acknowledgement of cell update in the MS;
the BTS of the second cell transfers the packet data to the MS.

Preferably, the method also comprises:
after the BSC sends the packet data, it receives the message for requesting the acknowledgement of cell update in the MS, and the message for requesting the acknowledgement of cell update in the MS carries the TLLI, the base station subsystem GPRS protocol virtual connection identifier (BVCI) of the MS and the first cell, the BVCI of the MS and the second cell; according to the received message for requesting the acknowledgement of the cell update in the MS, it sends an acknowledgement response message to the SGSN, and the acknowledgement response message carries the BVCI of the MS and the second cell as well as the amount information of the packet data.

Preferably, after the MS moves from the first cell to the second cell, the method also comprises:
the MS sends a radio channel allocation request message to the BTS of the second cell, and the BTS of the second cell transfers the request message to the BSC;
the BSC allocates a new radio channel to the MS to establish the TBF of the MS and the second cell, and send a radio channel allocation response message to the BTS of the second cell;
the BTS of the second cell transfers the response message to the MS, and the MS sends a resource request message carrying the TLLI to the BTS of the second cell according to the received response message, and the BTS of the second cell transfers the resource request message to the BSC.

Preferably, after the MS sends the resource request message and before the BSC receives the message sent by the SGSN for requesting the acknowledgement of cell update in the MS, the method also comprises:
the MS sends a logical link control protocol data unit (LLC PDU) to the SGSN, and the LLC PDU carries the TLL1, the identifier of the second cell in which the MS is located, and the identifier of the BSC controlling the second cell.

Preferably, the packet data of the first cell to be originally sent to the MS comprises:
the packet data of the first cell originally stored in the BSC and to be sent to the MS, and the packet data sent by the SGSN to the first cell before initiating the packet data transferring.

In the other aspect, the present invention provides a base station controller (BSC), and the base station controller comprises: a packet data acquiring module, a packet data transferring module and a packet data sending module; wherein,
the packet data acquiring module is used to locally search for the TBF of the MS and the first cell according to the TLLI pre-allocated to the MS by the SGSN after the MS moves from the first cell to the second cell, and to acquire the packet data of the first cell to be originally sent to the MS via the TBF of the MS and the first cell;
the packet data transferring module is used to locally search for the TBF of the MS and the second cell according to the TLLI and to transfer the packet data to the TBF of the MS and the second cell;
the packet data sending module is used to transfer the packet data through the BTS of the second cell to the MS via the TBF of the MS and the second cell before receiving the message sent by the SGSN for requesting the acknowledgement of the cell update in the MS.

Preferably, the BSC also comprises: a first message receiving module and a first message sending module; wherein,
the first message receiving module is used to receive the message for requesting the acknowledgement of the cell update in the MS after the packet data sending module sends the packet data, and the message for requesting the acknowledgement of the cell update in the MS carries the TLLI, the BVCI of the MS and the first cell, and the BVCI of the MS and the second cell;
the first message sending module is used to send acknowledgement response message to the SGSN after the first message receiving module receives the message for requesting the acknowledgement of the cell update in the MS, and the acknowledgement response message carries the BVCI of the MS and the second cell as well as the amount information of the packet data.

Preferably, the BSC also comprises: a second message receiving module, a processing module, a second message sending module and a third message receiving module; wherein,
the second message receiving module is used to receive the radio channel allocation request message transferred by the MS via the BTS of the second cell;
the processing module is used to allocate a new radio channel to the MS according to the request message and to establish the TBF of the MS and the second cell;
the second message sending module is used to transfer the radio channel allocation response message to the MS via the BTS of the second cell after the processing module establishes the TBF of the MS and the second cell;
the third message receiving module is used to receive the resource request message transferred by the MS via the BTS of the second cell after the second message sending module sends the response message, and the resource request message carries the TLLI.

In the aforementioned technical scheme, before the BSC receives the message for requesting the acknowledgement of the cell update in the MS, it transfers the packet data of the first cell to be originally sent to the MS to the TBF of the MS and the second cell, and then the TBF of the MS and the second cell sends the data to the BTS of the second cell, and finally the BTS of the second cell sends the data to the MS, thus to effectively reduce the packet data loss in the process of the MS moving from the first cell to the second cell, to ensure the normal data communication related to the MS and to reduce the retransmission rate of the packet data after the cell update.

### Brief Description of Drawings

FIG. 1 illustrates an application scenario of an embodiment of the present invention;
FIG. 2 illustrates the method for transferring the packet data in the wireless network in accordance of the first embodiment of the present invention;
FIG. 3 illustrates the structure of the base station controller in accordance with the second embodiment of the present invention;
FIG. 4 illustrates the effect of applying the existing technical scheme to transfer the packet data;
FIG. 5 illustrates the effect of applying the technical scheme of the embodiment of the present invention to transfer the packet data.

### Preferred Embodiments of the Present Invention

In order to make the purpose, technical scheme and advantage of the present invention more clearly, the present invention will be illustrated in further detail with combination of the accompanying figures and the embodiments.

It should be noted that the embodiments described in the following are only a part of the present invention rather than all the embodiments. All other embodiments acquired based on the embodiments of the present invention by those skilled in this field on the premise of no creative work should be in the scope of the claims of the present invention.

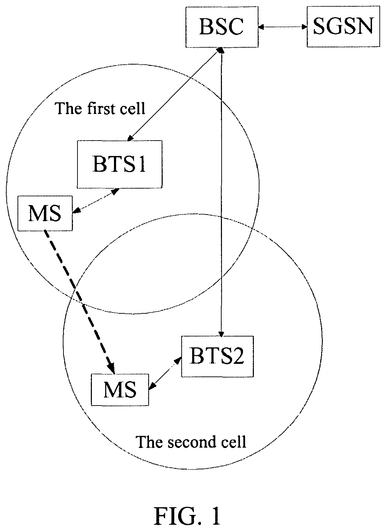

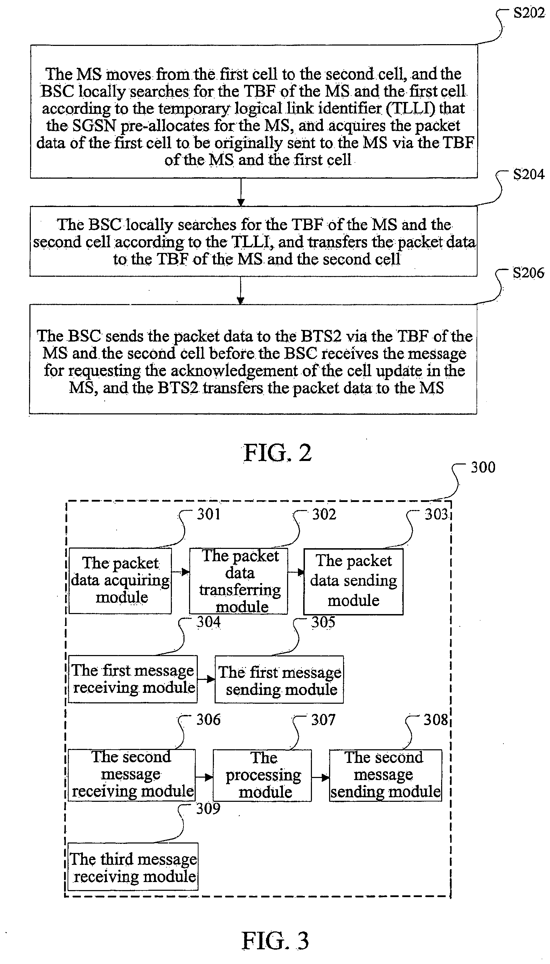

As shown in FIG. 1 and FIG. 2, where FIG. 1 illustrates an application scenario in accordance with an embodiment of the present invention, and FIG. 2 illustrates the method for transferring the packet data in the wireless network in the first embodiment of the present invention. With combination of FIG. 1 and FIG. 2, the BSC controls the BTS1 of the first cell and the BTS2 of the second cell in the figures, and the BTS1 and the BTS2 are responsible to receive and send the signals in the mobile communication between the network side and the MS, and the BSC connects with the SGSN. The BSC establishes the BSSGP virtual connections (BVCs) between the MS and the first cell as well as between the MS and the second cell in advance, and allocates the BSSGP virtual connection identifiers (BVCIs) of the first and second cells.

The method of the first embodiment comprises:
S202: The MS moves from the first cell to the second cell, and the BSC locally searches for the TBF of the MS and the first cell according to the temporary logical link identifier (TLLI) that the SGSN pre-allocates to the MS, and acquires the packet data of the first cell to be originally sent to the MS via the TBF of the MS and the first cell;
Wherein, the packet data of the first cell to be originally sent to the MS comprises: the packet data of the first cell originally stored in the BSC and to be sent to the MS, and the packet data sent by the SGSN to the first cell before initiating the packet data transferring.

S204: The BSC locally searches for the TBF of the MS and the second cell according to the TLLI, and transfers the packet data to the TBF of the MS and the second cell. Wherein, how to transfer the packet data is the prior art and will not be repeated here.

S206: The BSC send the packet data to the BTS2 via the TBF of the MS and the second cell, and the BTS2 transfers the packet data to the MS before the BSC receives the message sent by the SGSN for requesting the acknowledgement of cell update in the MS.

So far, the packet data transmission is completed.

The method embodiment also comprises: after the BSC sends the packet data, the SGSN sends a message for requesting the acknowledgement of the cell update in the MS, and the message for requesting the acknowledgement of the cell update in the MS carries the TLLI, the BVCI of the MS and the first cell, and the BVCI of the MS and the second cell; according to the received message for requesting the acknowledgement of the data update in the MS, the BSC sends a acknowledgement response message to the SGSN, and the acknowledgement response message carries the BVCI of the MS and the second cell as well as the amount information of the packet data.

It should be noted that, the message for requesting the acknowledgement of the data update in the MS is the FLUSH-LL message, correspondingly, the acknowledgement response message is the FLUSH-LL ACK message; the message for requesting the acknowledgement of the data update in the MS and the acknowledgement response message might be other type of messages, they are only specific examples here, and the present invention is not limited to the type of the messages.

After the MS moves from the first cell to the second cell, the method embodiment also comprises: the MS sends a radio channel allocation request message to the BTS2, and the BTS2 transfers the request message to the BSC; the BSC allocates a new radio channel to the MS, establishes the TBF of the MS and the second cell, and sends a radio channel allocation response message to the BTS2; the BTS2 transfers the response message to the MS, and the MS sends a resource request message carrying the TLLI to the BTS2 according to the received acknowledgement response message, and the BTS2 transfers the resource request message to the BSC.

After the MS sends the resource request message and before the BSC receives the message for requesting the acknowledgement of the cell update in the MS sent by the SGSN, the method embodiment also comprises: the MS sends a logical link control protocol data unit (LLC PDU) to the SGSN, and the LLC PDU carries the TLL1, the identifier of the second cell in which the MS is located, and the identifier of the BSC controlling the second cell.

The identifier of the second cell in which the MS is located is indicated with the combination of the location area code (LAC) and the routing area code (RAC) or with other means. The identifier of the BSC can be indicated with the MAC address or with other means. The means for indicating the identifier of the cell and the identifier of the BSC is only a specific example rather than a restriction to the present invention.

As shown in FIG. 3, FIG. 3 illustrates the structure of the base station controller in accordance with the second embodiment of the present invention. With combination of FIG. 1 and FIG. 3, the base station controller 300 in the second embodiment comprises:
The packet data acquiring module 301, used to locally search for the TBF of the MS and the first cell according to the TLLI pre-allocated to the MS by the SGSN after the MS moves from the first cell to the second cell, and to acquire the packet data of the first cell to be originally sent to the MS via the TBF of the MS and the first cell;
The packet data transferring module 302, used to locally search for the TBF of the MS and the second cell according to the TLLI and to transfer the packet data to the TBF of the MS and the second cell;
The packet data sending module 303, used to transfer the packet data through the BTS2 to the MS via the TBF of the MS and the second cell before receiving the message sent by the SGSN for requesting the acknowledgement of the cell update in the MS.

The BSC300 in the second embodiment also comprises:
The first message receiving module 304, used to receive the message for requesting the acknowledgement of the cell update in the MS after the packet data sending module 303 sends the packet data, wherein the message for requesting the acknowledgement of the cell update in the MS carries the TLLI, the BVCI of the MS and the first cell, and the BVCI of the MS and the second cell;
The first message sending module 305, used to send a acknowledgement response message to the SGSN after the first message receiving module 304 receives the message for requesting the acknowledgement of the cell update in the MS, wherein the acknowledgement response message carries the BVCI of the MS and the second cell as well as the amount information of the packet data.

The BSC300 in the second embodiment also comprises:
The second message receiving module 306, used to receive the radio channel allocation request message transferred by the MS through the BTS2;
The processing module 307, used to allocate a new radio channel to the MS according to the request message and establish the TBF of the MS and the second cell;
The second message sending module 308, used to transfer the radio channel allocation response message to the MS via the BTS2 after the processing module 307 establishes the TBF of the MS and the second cell;
The third message receiving module 309, used to receive the resource request message transferred by the MS via the BTS2 after the second message sending module 308 sends the response message, wherein the resource request message carries the TLLI.

In the second embodiment, the packet data of the first cell to be originally sent to the MS comprises: the packet data of the first cell originally stored in the BSC300 and to be sent to the MS, and the packet data sent by the SGSN to the first cell before initiating the packet data transferring.

The information interaction and execution between the modules in the above device can refer to the description in the method embodiment of the present invention since they are based on the same concept as the method embodiment of the present invention, thus they are not described here again.

In the following, the case of using the DuMeter tool to measure the packet data transferring is taken as the example to illustrate the beneficial effects generated by the technical scheme of the present invention.

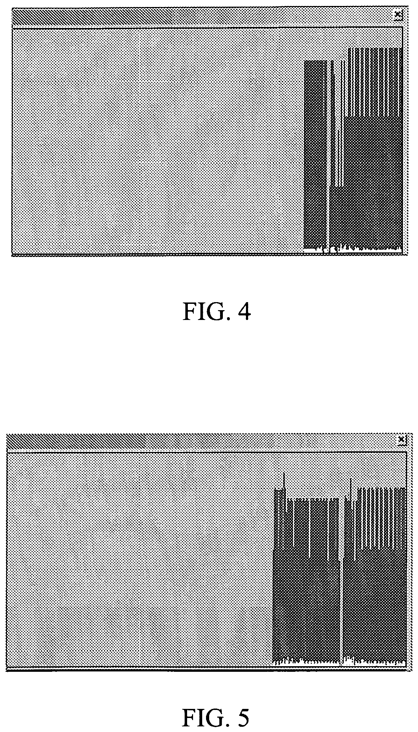

FIG. 4 illustrates the effect of applying the existing technical scheme to transfer the packet data. From the gaps in FIG. 4 and FIG. 5, it can be seen that short-term communication interruption is not avoidable in the process of the MS moving from the first cell to the second cell. By comparing the sizes of the gaps in FIG. 4 and FIG. 5, it can be seen that the packet data loss can be caused evidently by the existing technical scheme, while the technical scheme in the embodiment of the present invention can effectively reduce the packet data loss generated in the process of the MS moving from the first cell to the second cell, so as to ensure the normal data communication related to the MS and reduce the retransmission rate of the packet data after the cell update.

From the above description, it can be fully understood by those skilled in the field that the present invention can be fulfilled with software plus the necessary hardware platform or fully fulfilled with hardware tools, although the former is the better embodiment in most cases. Based on this understanding, some or all contributions by the technical scheme of the present invention can be embodied with software products, and the computer software products can be stored in storage medias such as ROM/RAM, magnetic disk or optical disk, including several commands used to make one computer device (such as a personal computer, server or network device) execute the method illustrated in some parts of the embodiment or each embodiment of the present invention.

The above description is only the specific embodiment of the present invention rather than the restriction of the present invention. Without departing from the scope defined in the claims of the present invention, all these types of modification or variations should belong to the protection scope of the claims of the present invention.

## Claims

1. A method for transferring packet data in a wireless network, comprising:
a mobile station moving (S202) from a first cell to a second cell;
a base station controller locally searching (S202) for a temporary block flow of the mobile station and the first cell according to a temporary logical link identifier that a serving general packet radio service support node pre-allocates for the mobile station, and acquiring (S202) packet data of the first cell to be originally sent to the mobile station via the temporary block flow of the mobile station and the first cell; locally searching (S204) for a temporary block flow of the mobile station and a second cell according to the temporary logical link identifier, and transferring (S204) the packet data to the temporary block flow of the mobile station and the second cell; sending (S206) the packet data to a base transceiver station of the second cell via the temporary block flow of the mobile station and the second cell before receiving message sent by the serving general packet radio service support node for requesting an acknowledgement of cell update in the mobile station;
the base transceiver station of the second cell transferring (S206) the packet data to the mobile station.

2. The method for transferring packet data in a wireless network of claim 1, further comprising:
after the base station controller sends the packet data, receiving the message for requesting the acknowledgement of the cell update in the mobile station, wherein the message for requesting the acknowledgement of the cell update in the mobile station carries the temporary logical link identifier, a base station subsystem general packet radio service protocol virtual connection identifier of the mobile station and the first cell, a base station subsystem general packet radio service protocol virtual connection identifier of the mobile station and the second cell; according to the received message for requesting the acknowledgement of the cell update in the mobile station, sending an acknowledgement response message to the serving general packet radio service support node, wherein the acknowledgement response message carries the base station subsystem general packet radio service protocol virtual connection identifier of the mobile station and the second cell as well as amount information of the packet data.

3. The method for transferring packet data in a wireless network of claim 1 or 2, wherein, after the mobile station moves from the first cell to the second cell, the method further comprises:
the mobile station sending a radio channel allocation request message to the base transceiver station of the second cell, and the base transceiver station of the second cell transferring the request message to the base station controller;
the base station controller allocating a new radio channel for the mobile station to establish the temporary block flow of the mobile station and the second cell, and sending a radio channel allocation response message to the base transceiver station of the second cell;
the base transceiver station of the second cell transferring the response message to the mobile station, and the mobile station sending a resource request message carrying the temporary logical link identifier to the base transceiver station of the second cell according to received response message, and the base transceiver station of the second cell transferring the resource request message to the base station controller.

4. The method for transferring packet data in a wireless network of claim 3, wherein, after the mobile station sends the resource request message and before the base station controller receives the message sent by the serving general packet radio service support node for requesting the acknowledgement of the cell update in the mobile station, the method further comprises:
the mobile station sending a logical link control protocol data unit to the serving general packet radio service support node, wherein the logical link control protocol data unit carries the temporary logical link identifier, the identifier of the second cell in which the mobile station is located, and the identifier of the base station controller controlling the second cell.

5. The method for transferring packet data in a wireless network of claim 1 or 2, wherein, the packet data of the first cell to be originally sent to the mobile station comprises: the packet data of the first cell originally stored in the base station controller and to be sent to the mobile station, and the packet data sent by the serving general packet radio service support node to the first cell before initiating the packet data transferring.

6. A base station controller, comprising: a packet data acquiring module (301), a packet data transferring module (302) and a packet data sending module (303); wherein,
the packet data acquiring module (301) is used to locally search for a temporary block flow of a mobile station and a first cell according to a temporary logical link identifier pre-allocated for the mobile station by a serving general packet radio service support node after the mobile station moves from the first cell to a second cell, and to acquire packet data of the first cell to be originally sent to the mobile station via the temporary block flow of the mobile station and the first cell;
the packet data transferring module (302) is used to locally search for a temporary block flow of the mobile station and the second cell according to the temporary logical link identifier, and to transfer the packet data to the temporary block flow of the mobile station and the second cell;
the packet data sending module (303) is used to transfer the packet data through a base transceiver station of the second cell to the mobile station via the temporary block flow of the mobile station and the second cell before receiving message sent by the serving general packet radio service support node for requesting an acknowledgement of cell update in the mobile station.

7. The base station controller of claim 6, wherein, the base station controller also comprises: a first message receiving module (304) and a first message sending module (305); wherein,
the first message receiving module (304) is used to receive the message for requesting the acknowledgement of the cell update in the mobile station after the packet data sending module sends the packet data, wherein the message for requesting the acknowledgement of the cell update in the mobile station carries the temporary logical link identifier, a base station subsystem general packet radio service protocol virtual connection identifier of the mobile station and the first cell, and a base station subsystem general packet radio service protocol virtual connection identifier of the mobile station and the second cell;
the first message sending module (305) is used to send an acknowledgement response message to the serving general packet radio service support node after the first message receiving module receives the message for requesting the acknowledgement of the cell update in the mobile station, wherein the acknowledgement response message carries the base station subsystem general packet radio service protocol virtual connection identifier of the mobile station and the second cell as well as amount information of the packet data.

8. The base station controller of claim 6 or 7, wherein, the base station controller also comprises: a second message receiving module (306), a processing module (307), a second message sending module (308) and a third message receiving module (309); wherein,
the second message receiving module (306) is used to receive a radio channel allocation request message transferred by the mobile station via the base transceiver station of the second cell;
the processing module (307) is used to allocate a new radio channel for the mobile station according to the request message and to establish the temporary block flow of the mobile station and the second cell;
the second message sending module (308) is used to transfer a radio channel allocation response message to the mobile station via the base transceiver station of the second cell after the processing module establishes the temporary block flow of the mobile station and the second cell;
the third message receiving module (309) is used to receive a resource request message transferred by the mobile station via the base transceiver station of the second cell after the second message sending module sends the response message, wherein the resource request message carries the temporary logical link identifier.

9. The base station controller of claim 6 or 7, wherein, the packet data of the first cell to be originally sent to the mobile station comprises: the packet data of the first cell originally stored in the base station controller and to be sent to the mobile station, and the packet data sent by the serving general packet radio service support node to the first cell before initiating the packet data transferring.

## Patentansprüche

1. Verfahren zum Übertragen von Paketdaten in einem drahtlosen Netzwerk, wobei das Verfahren umfasst, dass:
eine mobile Station von einer ersten Zelle in eine zweite Zelle bewegt wird (S202);
ein Basisstationscontroller lokal nach einem Temporary Block Flow der mobilen Station und der ersten Zelle in Übereinstimmung mit einem Temporary Logical Link Identifier sucht (S202), den ein aktiver allgemeiner Paketfunkdienst-Unterstützungsknoten für die mobile Station vorab reserviert hat, und Paketdaten der ersten Zelle beschafft (S202), die ursprünglich über den Temporary Block Flow der mobilen Station und der ersten Zelle an die mobile Station gesendet werden sollten; er lokal nach einem Temporary Block Flow der mobilen Station und einer zweiten Zelle in Übereinstimmung mit dem Temporary Logical Link Identifier sucht (S204) und die Paketdaten an den Temporary Block Flow der mobilen Station und der zweiten Zelle überträgt (S204); er die Paketdaten an eine Sender/Empfänger-Basisstation der zweiten Zelle über den Temporary Block Flow der mobilen Station und der zweiten Zelle sendet (S206), bevor er eine Botschaft empfängt, die von dem aktiven allgemeinen Paketfunkdienst-Unterstützungsknoten gesendet wird, um eine Bestätigung einer Zellenaktualisierung in der mobilen Station anzufordern;
wobei die Sender/Empfänger-Basisstation der zweiten Zelle die Paketdaten an die mobile Station überträgt (S206).

2. Verfahren zum Übertragen von Paketdaten in einem drahtlosen Netzwerk nach Anspruch 1, wobei das Verfahren ferner umfasst, dass:
nachdem der Basisstationscontroller die Paketdaten gesendet hat, die Botschaft zur Anforderung der Bestätigung der Zellenaktualisierung in der mobilen Station empfangen wird, wobei die Botschaft zur Anforderung der Bestätigung der Zellenaktualisierung in der mobilen Station den Temporary Logical Link Identifier, eine Kennung einer virtuellen Verbindung eines allgemeinen Paketfunkdienstprotokolls eines Basisstationsteilsystems der mobilen Station und der ersten Zelle und eine Kennung einer virtuellen Verbindung eines allgemeinen Paketfunkdienstprotokolls eines Basisstationsteilsystems der mobilen Station und der zweiten Zelle transportiert; in Übereinstimmung mit der empfangenen Botschaft zur Anforderung der Bestätigung der Zellenaktualisierung in der mobilen Station eine Bestätigungsantwortbotschaft an den aktiven allgemeinen Paketfunkdienst-Unterstützungsknoten gesendet wird, wobei die Bestätigungsantwortbotschaft die Kennung der virtuellen Verbindung des allgemeinen Paketfunkdienstprotokolls des Basisstationsteilsystems der mobilen Station und der zweiten Zelle sowie Mengeninformationen der Paketdaten transportiert.

3. Verfahren zum Übertragen von Paketdaten in einem drahtlosen Netzwerk nach Anspruch 1 oder 2, wobei das Verfahren, nachdem die mobile Station von der ersten Zelle in die zweite Zelle bewegt wurde, ferner umfasst, dass:
die mobile Station eine Funkkanalreservierungsanforderungsbotschaft an die Sender/Empfänger-Basisstation der zweiten Zelle sendet und die Sender/Empfänger-Basisstation der zweiten Zelle die Anforderungsbotschaft an den Basisstationscontroller überträgt;
der Basisstationscontroller einen neuen Funkkanal für die mobile Station reserviert, um den Temporary Block Flow der mobilen Station und der zweiten Zelle herzustellen, und eine Funkkanalreservierungsantwortbotschaft an die Sender/Empfänger-Basisstation der zweiten Zelle sendet;
die Sender/Empfänger-Basisstation der zweiten Zelle die Antwortbotschaft an die mobile Station überträgt, und die mobile Station eine Ressourcenanforderungsbotschaft, welche die Temporary Logical Link Identifier transportiert, an die Sender/Empfänger-Basisstation der zweiten Zelle in Übereinstimmung mit der empfangenen Antwortbotschaft sendet, und die Sender/Empfänger-Basisstation der zweiten Zelle die Ressourcenanforderungsbotschaft an den Basisstationscontroller überträgt.

4. Verfahren zum Übertragen von Paketdaten in einem drahtlosen Netzwerk nach Anspruch 3, wobei das Verfahren, nachdem die mobile Station die Ressourcenanforderungsbotschaft gesendet hat und bevor der Basisstationscontroller die Botschaft empfängt, die von dem aktiven allgemeinen Paketfunkdienst-Unterstützungsknoten gesendet wurde, um die Bestätigung der Zellenaktualisierung in der mobilen Station anzufordern, ferner umfasst, dass:
die mobile Station eine Logikverbindungssteuerungs-Protokolldateneinheit an den aktiven allgemeinen Paketfunkdienst-Unterstützungsknoten sendet, wobei die Logikverbindungssteuerungs-Protokolldateneinheit den Temporary Logical Link Identifier, die Kennung der zweiten Zelle, in welcher sich die mobile Station befindet, und die Kennung des Basisstationscontrollers, der die zweite Zelle steuert, transportiert.

5. Verfahren zum Übertragen von Paketdaten in einem drahtlosen Netzwerk nach Anspruch 1 oder 2, wobei die Paketdaten der ersten Zelle, die ursprünglich an die mobile Station gesendet werden sollten, umfassen: die Paketdaten der ersten Zelle, die ursprünglich in dem Basisstationscontroller gespeichert waren und an die mobile Station gesendet werden sollten, und die Paketdaten, die von dem aktiven allgemeinen Paketfunkdienst-Unterstützungsknoten an die erste Zelle gesendet wurden, bevor die Übertragung der Paketdaten eingeleitet wurde.

6. Basisstationscontroller, umfassend: ein Paketdatenbeschaffungsmodul (301), ein Paketdatenübertragungsmodul (302) und ein Paketdatensendemodul (303); wobei
das Paketdatenbeschaffungsmodul (301) verwendet wird, um lokal nach einem Temporary Block Flow einer mobilen Station und einer ersten Zelle in Übereinstimmung mit einem Temporary Logical Link Identifier zu suchen, der von einem aktiven allgemeinen Paketfunkdienst-Unterstützungsknoten für die mobile Station vorab reserviert wurde, nachdem die mobile Station von der ersten Zelle in eine zweite Zelle bewegt wurde, und um Paketdaten der ersten Zelle zu beschaffen, die ursprünglich über den Temporary Block Flow der mobilen Station und der ersten Zelle an die mobile Station gesendet werden sollten;
das Paketdatenübertragungsmodul (302) verwendet wird, um lokal nach einem Temporary Block Flow der mobilen Station und der zweiten Zelle in Übereinstimmung mit dem Temporary Logical Link Identifier zu suchen, und um die Paketdaten an den Temporary Block Flow der mobilen Station und der zweiten Zelle zu übertragen;
das Paketdatensendemodul (303) verwendet wird, um die Paketdaten durch eine Sender/Empfänger-Basisstation der zweiten Zelle über den Temporary Block Flow der mobilen Station und der zweiten Zelle an die mobile Station zu übertragen, bevor er eine Botschaft empfangen wird, die von dem aktiven allgemeinen Paketfunkdienst-Unterstützungsknoten gesendet wurde, um eine Bestätigung einer Zellenaktualisierung in der mobilen Station anzufordern.

7. Basisstationscontroller nach Anspruch 6, wobei der Basisstationscontroller außerdem umfasst: ein erstes Botschaftenempfangsmodul (304) und ein erstes Botschaftensendemodul (305); wobei
das erste Botschaftenempfangsmodul (304) verwendet wird, um die Botschaft zur Anforderung der Bestätigung der Zellenaktualisierung in der mobilen Station zu empfangen, nachdem das Paketdatensendemodul die Paketdaten gesendet hat, wobei die Botschaft zur Anforderung der Bestätigung der Zellenaktualisierung in der mobilen Station den Temporary Logical Link Identifier, eine Kennung einer virtuellen Verbindung eines allgemeinen Paketfunkdienstprotokolls eines Basisstationsteilsystems der mobilen Station und der ersten Zelle, und eine Kennung einer virtuellen Verbindung eines allgemeinen Paketfunkdienstprotokolls eines Basisstationsteilsystems der mobilen Station und der zweiten Zelle transportiert;
das erste Botschaftensendemodul (305) verwendet wird, um eine Bestätigungsantwortbotschaft an den aktiven allgemeinen Paketfunkdienst-Unterstützungsknoten zu senden, nachdem das erste Botschaftenempfangsmodul die Botschaft zur Anforderung der Bestätigung der Zellenaktualisierung in der mobilen Station empfangen hat, wobei die Bestätigungsantwortbotschaft die Kennung der virtuellen Verbindung des allgemeinen Paketfunkdienstprotokolls des Basisstationsteilsystems der mobilen Station und der zweiten Zelle sowie Mengeninformationen der Paketdaten transportiert.

8. Basisstationscontroller nach Anspruch 6 oder 7, wobei der Basisstationscontroller außerdem umfasst: ein zweites Botschaftenempfangsmodul (306), ein Verarbeitungsmodul (307), ein zweites Botschaftensendemodul (308) und ein drittes Botschaftenempfangsmodul (309); wobei
das zweite Botschaftenempfangsmodul (306) verwendet wird, um eine Funkkanalreservierungsanforderungsbotschaft zu empfangen, die von der mobilen Station über die Sender/Empfänger-Basisstation der zweiten Zelle übertragen wird;
das Verarbeitungsmodul (307) verwendet wird, um einen neuen Funkkanal für die mobile Station in Übereinstimmung mit der Anforderungsbotschaft zu reservieren und um den Temporary Block Flow der mobilen Station und der zweiten Zelle herzustellen;
das zweite Botschaftensendemodul (308) verwendet wird, um eine Funkkanalreservierungsantwortbotschaft über die Sender/Empfänger-Basisstation der zweiten Zelle an die mobile Station zu übertragen, nachdem das Verarbeitungsmodul den Temporary Block Flow der mobilen Station und der zweiten Zelle hergestellt hat;
das dritte Botschaftenempfangsmodul (309) verwendet wird, um eine Ressourcenanforderungsbotschaft zu empfangen, die von der mobilen Station über die Sender/Empfänger-Basisstation der zweiten Zelle übertragen wird, nachdem das zweite Botschaftensendemodul die Antwortbotschaft gesendet hat, wobei die Ressourcenanforderungsbotschaft den Temporary Logical Link Identifier transportiert.

9. Basisstationscontroller nach Anspruch 6 oder 7, wobei die Paketdaten der ersten Zelle, die ursprünglich an die mobile Station gesendet werden sollten, umfassen: die Paketdaten der ersten Zelle, die ursprünglich in dem Basisstationscontroller gespeichert wurden und an die mobile Station gesendet werden sollten, und die Paketdaten, die von dem aktiven allgemeinen Paketfunkdienst-Unterstützungsknoten an die erste Zelle gesendet wurden, bevor die Übertragung der Paketdaten eingeleitet wurde.

## Revendications

1. Procédé pour transférer des données de paquet dans un réseau sans fil, comprenant :
une station mobile se déplaçant (S202) d'une première cellule à une seconde cellule ;
un contrôleur de station de base recherchant localement (S202) un flux de blocs temporaire de la station mobile et de la première cellule selon un identificateur de liaison logique temporaire qu'un noeud de support de service général de radiocommunication par paquets de desserte pré-alloue pour la station mobile, et acquérant (S202) des données de paquet de la première cellule devant être envoyées à l'origine à la station mobile via le flux de blocs temporaire de la station mobile et de la première cellule ; recherchant localement (S204) un flux de blocs temporaire de la station mobile et d'une seconde cellule selon l'identificateur de liaison logique temporaire, et transférant (S204) les données de paquet au flux de blocs temporaire de la station mobile et de la seconde cellule ; envoyant (S206) les données de paquet à une station émettrice-réceptrice de base de la seconde cellule via le flux de blocs temporaire de la station mobile et de la seconde cellule avant la réception d'un message envoyé par le noeud de support de service général de radiocommunication par paquets de desserte pour demander un accusé de réception de mise à jour de cellule dans la station mobile ;
la station émettrice-réceptrice de base de la seconde cellule transférant (S206) les données de paquet à la station mobile.

2. Procédé pour transférer des données de paquet dans un réseau sans fil selon la revendication 1, comprenant en outre :
après que le contrôleur de station de base envoie les données de paquet, la réception du message pour demander l'accusé de réception de la mise à jour de cellule dans la station mobile, où le message pour demander l'accusé de réception de la mise à jour de cellule dans la station mobile porte l'identificateur de liaison logique temporaire, un identificateur de connexion virtuelle de protocole de service général de radiocommunication par paquets de sous-système de station de base de la station mobile et de la première cellule, un identificateur de connexion virtuelle de protocole de service général de radiocommunication par paquets de sous-système de station de base de la station mobile et de la seconde cellule ; selon le message reçu pour demander l'accusé de réception de la mise à jour de cellule dans la station mobile, l'envoi d'un message de réponse d'accusé de réception au noeud de support de service général de radiocommunication par paquets de desserte, où le message de réponse d'accusé de réception porte l'identificateur de connexion virtuelle de protocole de service général de radiocommunication par paquets de sous-système de station de base de la station mobile et de la seconde cellule ainsi que des informations de quantité des données de paquet.

3. Procédé pour transférer des données de paquet dans un réseau sans fil selon la revendication 1 ou 2, dans lequel, après que la station mobile se déplace de la première cellule à la seconde cellule, le procédé comprenant en outre :
la station mobile envoyant un message de demande d'allocation de canal radio à la station émettrice-réceptrice de base de la seconde cellule, et la station émettrice-réceptrice de base de la seconde cellule transférant le message de demande au contrôleur de station de base ;
le contrôleur de station de base allouant un nouveau canal radio pour que la station mobile établisse le flux de blocs temporaire de la station mobile et de la seconde cellule, et envoyant un message de réponse d'allocation de canal radio à la station émettrice-réceptrice de base de la seconde cellule ;
la station émettrice-réceptrice de base de la seconde cellule transférant le message de réponse à la station mobile, et la station mobile envoyant un message de demande de ressource portant l'identificateur de liaison logique temporaire à la station émettrice-réceptrice de base de la seconde cellule selon le message de réponse reçu, et la station émettrice-réceptrice de base de la seconde cellule transférant le message de demande de ressource au contrôleur de station de base.

4. Procédé pour transférer des données de paquet dans un réseau sans fil selon la revendication 3, dans lequel, après que la station mobile envoie le message de demande de ressource et avant que le contrôleur de station de base ne reçoive le message envoyé par le noeud de support de service général de radiocommunication par paquets de desserte pour demander l'accusé de réception de la mise à jour de cellule dans la station mobile, le procédé comprenant en outre :
la station mobile envoyant une unité de données de protocole de contrôle de liaison logique au noeud de support de service général de radiocommunication par paquets de desserte, où l'unité de données de protocole de contrôle de liaison logique porte l'identificateur de liaison logique temporaire, l'identificateur de la seconde cellule dans laquelle la station mobile est localisée, et l'identificateur du contrôleur de station de base contrôlant la seconde cellule.

5. Procédé pour transférer des données de paquet dans un réseau sans fil selon la revendication 1 ou 2, dans lequel, les données de paquet de la première cellule devant être envoyées à l'origine à la station mobile comprennent : les données de paquet de la première cellule stockées à l'origine dans le contrôleur de station de base et devant être envoyées à la station mobile, et les données de paquet envoyées par le noeud de support de service général de radiocommunication par paquets de desserte à la première cellule avant l'initiation du transfert de données de paquet.

6. Contrôleur de station de base, comprenant : un module d'acquisition de données de paquet (301), un module de transfert de données de paquet (302) et un module d'envoi de données de paquet (303) ; dans lequel,
le module d'acquisition de données de paquet (301) est utilisé pour rechercher localement un flux de blocs temporaire d'une station mobile et d'une première cellule selon un identificateur de liaison logique temporaire pré-alloué pour la station mobile par un noeud de support de service général de radiocommunication par paquets de desserte après que la station mobile se déplace de la première cellule à une seconde cellule, et pour acquérir des données de paquet de la première cellule devant être envoyées à l'origine à la station mobile via le flux de blocs temporaire de la station mobile et de la première cellule ;
le module de transfert de données de paquet (302) est utilisé pour rechercher localement un flux de blocs temporaire de la station mobile et de la seconde cellule selon l'identificateur de liaison logique temporaire, et pour transférer les données de paquet au flux de blocs temporaire de la station mobile et de la seconde cellule ;
le module d'envoi de données de paquet (303) est utilisé pour transférer les données de paquet par l'intermédiaire d'une station émettrice-réceptrice de base de la seconde cellule à la station mobile via le flux de blocs temporaire de la station mobile et de la seconde cellule avant la réception d'un message envoyé par le noeud de support de service général de radiocommunication par paquets de desserte pour demander un accusé de réception de mise à jour de cellule dans la station mobile.

7. Contrôleur de station de base selon la revendication 6, le contrôleur de station de base comprenant également : un premier module de réception de message (304) et un premier module d'envoi de message (305) ; dans lequel,
le premier module de réception de message (304) est utilisé pour recevoir le message pour demander l'accusé de réception de la mise à jour de cellule dans la station mobile après que le module d'envoi de données de paquet envoie les données de paquet, où le message pour demander l'accusé de réception de la mise à jour de cellule dans la station mobile porte l'identificateur de liaison logique temporaire, un identificateur de connexion virtuelle de protocole de service général de radiocommunication par paquets de sous-système de station de base de la station mobile et de la première cellule, et un identificateur de connexion virtuelle de protocole de service général de radiocommunication par paquets de sous-système de station de base de la station mobile et de la seconde cellule ;
le premier module d'envoi de message (305) est utilisé pour envoyer un message de réponse d'accusé de réception au noeud de support de service général de radiocommunication par paquets de desserte après que le premier module de réception de message reçoit le message pour demander l'accusé de réception de la mise à jour de cellule dans la station mobile, où le message de réponse d'accusé de réception porte l'identificateur de connexion virtuelle de protocole de service général de radiocommunication par paquets de sous-système de station de base de la station mobile et de la seconde cellule ainsi que des informations de quantité des données de paquet.

8. Contrôleur de station de base selon la revendication 6 ou 7, le contrôleur de station de base comprenant également : un deuxième module de réception de message (306), un module de traitement (307), un deuxième module d'envoi de message (308) et un troisième module de réception de message (309) ; dans lequel,
le deuxième module de réception de message (306) est utilisé pour recevoir un message de demande d'allocation de canal radio transféré par la station mobile via la station émettrice-réceptrice de base de la seconde cellule ;
le module de traitement (307) est utilisé pour allouer un nouveau canal radio pour la station mobile selon le message de demande et pour établir le flux de blocs temporaire de la station mobile et de la seconde cellule ;
le deuxième module d'envoi de message (308) est utilisé pour transférer un message de réponse d'allocation de canal radio à la station mobile via la station émettrice-réceptrice de base de la seconde cellule après que le module de traitement établit le flux de blocs temporaire de la station mobile et de la seconde cellule ;
le troisième module de réception de message (309) est utilisé pour recevoir un message de demande de ressource transféré par la station mobile via la station émettrice-réceptrice de base de la seconde cellule après que le deuxième module d'envoi de message envoie le message de réponse, où le message de demande de ressource porte l'identificateur de liaison logique temporaire.

9. Contrôleur de station de base selon la revendication 6 ou 7, dans lequel, les données de paquet de la première cellule devant être envoyées à l'origine à la station mobile comprennent : les données de paquet de la première cellule stockées à l'origine dans le contrôleur de station de base et devant être envoyées à la station mobile, et les données de paquet envoyées par le noeud de support de service général de radiocommunication par paquets de desserte à la première cellule avant l'initiation du transfert de données de paquet.
